# EUROPEAN PATENT APPLICATION

(11) **EP 1 816 771 A1**
(43) Date of publication of application: **08.08.2007**
(21) Application number: 07250451.7
(22) Date of filing: 02.02.2007
(51) Int. Cl.: H04J 3/06, H04L 7/00

(54) **Method and apparatus for aligning source data streams in a communications network**

(30) Priority: 04.02.2006 US 347025
(71) Applicant: Tellabs Operations, Inc., Naperville, IL 60563 (US)
(72) Inventor: Daugherty, Charles H., Naperville, Illinois 60563 (US); Mizialko, Kenneth S., Naperville, Illinois 60563 (US)
(74) Representative: Hackney, Nigel John

(57) **Abstract**

An alignment node (150) is coupled to received a source data stream (112) organized as frames. The alignment node detects a frame boundary of the source data stream at a detected position at a first point in time (T1). The alignment node computes an offset defined by the displacement of the frame boundary from a pre-determined position at a second point in time (T2). An alignment adjustment corresponding to the offset is communicated to the source of the source data stream.

## Description

This invention relates to the field of communications. In particular, this invention is drawn to methods and apparatus for aligning source data streams in a communications network.

Some telecommunication applications rely upon high bandwidth digital multiplexing techniques for data transport in a network. Due to the variety of network layer protocols, interfaces, and mediums that facilitate communication between nodes of the network, standards have been developed to support the multiplexing of a wide variety of data formats and data rates onto a common high bandwidth signal.

For example, time division multiplexing (TDM) permits combining a plurality of data streams from individual sources into a higher speed data stream for transmission on a single path. The source data streams represent distinct channels for the multiplexer. The source data streams are time-sliced and the slices are interleaved to form the higher speed data stream. Individual channels are thus expressed as periodically recurring time slots. A source data stream can be recovered by reassembling the slices from the associated channel.

In order to facilitate transport, the data stream is organized into packages referred to as frames. A TDM switch requires alignment of the incoming frames of the plurality of source data streams. Even if the sources were synchronized so that the frames of the plurality of data streams were aligned at the sources at the time of transmission, the data streams take different paths to the TDM switch and thus may incur varying latencies such that the data streams are not in frame alignment at the TDM switch. The sources may be provided with timing offsets to change when the frames are sent relative to a frame sync that is recovered from the TDM switch.

One method for achieving the appropriate alignment of the frames at the TDM switch walks each source through a series of timing offsets until the TDM switch signals that the frame boundary is located within a TDM switch input buffer at the expected time. A fine tuning alignment may then be applied based upon feedback from the TDM switch in an iterative process that determines the bounds of the input buffer. Once the bounds are known, the center is determined and a final adjustment is applied in an effort to center the frame boundary in the input buffer.

The number of timing offsets that must be tried varies inversely with the size of the input buffer and directly with worst-case variation in path latencies (the difference in latencies is presumed to be considerably less than the transmission time for a frame). A large number of timing offsets may have to be tried before the frame boundary is positioned in the alignment node input buffer at the expected time. This approach does not scale well as the variation in path lengths increases This can result in an undesirably time-consuming frame-alignment operation.

One method includes detecting a frame boundary of a source data stream at a detected position at a first point in time (T1). An offset defined by the displacement of the frame boundary from a pre-determined position at a second point in time (T2) is computed. An alignment adjustment is communicated to a source of the source data stream, wherein the alignment adjustment corresponds to the offset.

One apparatus includes an alignment node coupled to receive a source data stream organized into frames from a source. The alignment node generates an alignment adjustment corresponding to an offset. The offset is defined by a displacement of a frame boundary detected at a detected position at a first point in time (T1) from a pre-determined position at a second point in time (T2).

### BRIEF DESCRIPTION OF THE DRAWINGS

The present invention is illustrated by way of example and not limitation in the figures of the accompanying drawings, in which like references indicate similar elements and in which:
Figure 1 illustrates one embodiment of a communication network.
Figure 2 illustrates one embodiment of a frame alignment method.
Figure 3 illustrates one embodiment of an alignment node.
Figure 4 illustrates one embodiment of a method of computing the amount of displacement of a frame boundary using an offset timer.
Figure 5 illustrates one embodiment of a method of adjusting a source timing offset.
Figure 6 illustrates an alternative embodiment of a method of adjusting a source timing offset.
Figure 7 illustrates an alternative embodiment of a method of adjusting a source timing offset.
Figure 8 illustrates an alternative embodiment of a method of adjusting a source timing offset.
Figure 9 illustrates one embodiment of a multiframe.
Figure 10 illustrates one embodiment of multiframe alignment apparatus.
Figure 11 illustrates one embodiment of a method of performing a multiframe alignment.
Figure 12 illustrates one embodiment of a method for performing either a frame alignment or a multiframe alignment using multiple granularities.

### DETAILED DESCRIPTION

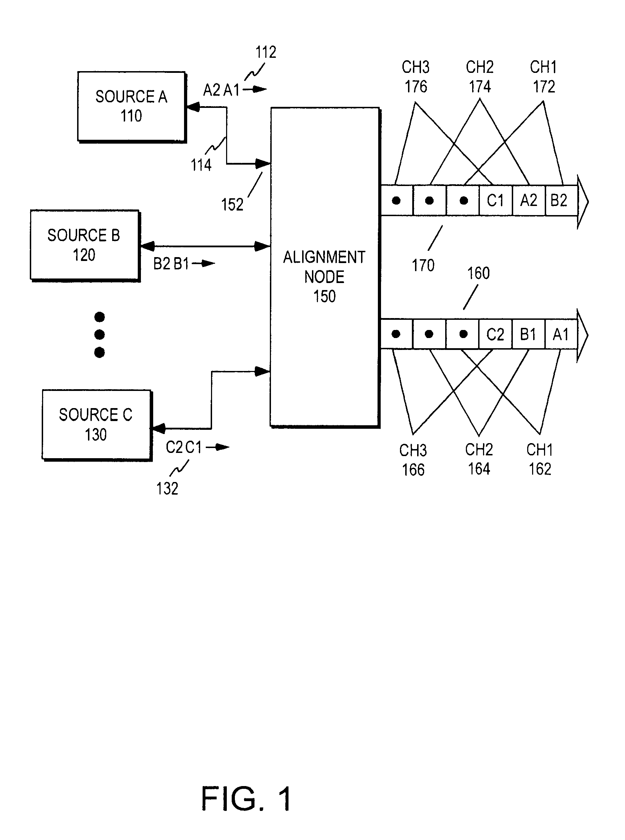

Figure 1 illustrates one embodiment of a communication network including an alignment node 150 and a plurality of source nodes 110,120,130 ("sources"). Each source (e.g., 110) is coupled to the alignment node at an associated input 152. Each source 110 provides a source data stream 112 to the alignment node.

The alignment node may perform any of a number of functions (switching, multiplexing, etc.). The alignment node is referred to as an "alignment node" because the underlying functionality dictates that its inputs (i.e., the source data streams) must be commonly aligned on a pre-determined boundary. A time division multiplexer (TDM) switch is one example of such an alignment node.

In one embodiment, the source data is structured into frames prior to serial transmission as a source data stream to the alignment node. The frame structure facilitates transport from the source to a destination. The frame may include data that is interpreted, for example, as overhead, control, or payload data at various levels within the transport hierarchy. Given that the frame has a known structure, identification of the frame boundary enables location of overhead, control, or payload data. Without knowledge of the location of the frame boundary, the frame contents cannot be properly interpreted.

The alignment node requires sources to transmit source data streams such that the alignment node starts receiving a frame of data at a point in time pre-determined by the alignment node. The pre-determined time is periodic in nature such that subsequent frames are received at pre-determined intervals from the first frame. In order to achieve frame alignment among the received plurality of data streams, the alignment node constrains the sources to begin transmitting their respective frames within a range of time intervals dictated by the variation in latencies of the paths.

A TDM switch produces a plurality of output data streams 160,170. Switching takes place at logical entity level such that a logical entity (e.g., virtual tributary) corresponding to some grouping of the data can be switched onto a given channel of one of the output data streams 160, 170. The data forming the grouping may consist of data distributed throughout the data stream such that logical entities need not correspond to adjacent clusters of data. The logical entity is transmitted using time division multiplexing to send portions of the logical entity at periodic successive time slots representing channels of the output data stream.

The source data streams and output data streams are serial data streams. The source data streams are sliced and interleaved into pre-determined time slots of one or more of the output data streams 160, 170. The time slots represent channels 162, 164, 166 and 172, 174, 176 of the output data streams. Thus, for example, the logical entity that includes A1 from serial data stream 112 is switched to channel 1 (CH1 162) of output data stream 160. The logical entity that includes A2 from serial data stream 112 is switched to channel 2 (CH2 174) of output data stream 170. The logical entity that includes C1 from serial data stream 132 is switched to channel 3 (CH3 176) of output data stream 170. The TDM switch must begin receiving a frame at a time pre-determined by the TDM switch. An input 152 is frame-aligned when this condition is met.

Even if the sources 110,120,130 provided source data streams that were frame-aligned with respect to each other at the sources, variations in the paths 114 carrying the data streams would tend to cause divergence in alignment such that the source data streams are no longer aligned with respect to each other at the alignment node inputs.

As a practical matter, the paths connecting the alignment node and the sources must be permitted to have arbitrary lengths. Sources, for example, may be located on different shelves or otherwise be positioned in locations that require paths of different lengths to the alignment node. Paths of different lengths, however, introduce different latencies into their associated data streams as a result of different propagation times.

The path type may likewise be arbitrary. Some sources may be connected to the alignment node optically while others are connected electrically. Latencies may also be introduced by conversions between the electrical and optical domains.

In order to accommodate different latencies, the alignment node has an input buffer for each source data stream. A given source data stream is frame-aligned if a frame is detected in its associated alignment node input buffer at the pre-determined time. Even though data streams may be "frame-aligned" there may still be discrepancies between the relative locations of the frame boundaries of different source data streams within their respective input buffers.

As the discrepancies increase, so does the minimum input buffer size. Preferably, the input buffers should be as small as possible. Large discrepancies between the relative locations of the frame boundaries undesirably increase the minimum input buffer size without improving throughput of the buffers or the alignment node.

Assuming that the source data streams can be controlled to ensure that the frame boundaries are located within the input buffers at the time required by the alignment node, the input buffers need only have sufficient capacity to account for the variation in alignment (i.e., skew) across all the source data streams. The size of the input buffers is thus dictated at least in part by the precision with which the source data streams can be brought into alignment with each other.

Communication between the sources 110, 120, 130 and the alignment node is bi-directional. The sources 110, 120, 130 are receptive to an alignment adjustment from the alignment node for time shifting their respective source data streams. Time shifting enables a source to change the point in time at which it begins sending a frame relative to a recovered frame sync. Appropriate selection of the alignment adjustment ensures a frame is received at an input buffer at a time pre-determined by the alignment node. The alignment node provides an independent alignment adjustment for each source data stream. In one embodiment, after alignment, each frame boundary is positioned substantially at the center of its respective input buffer at the time pre-determined by the alignment node.

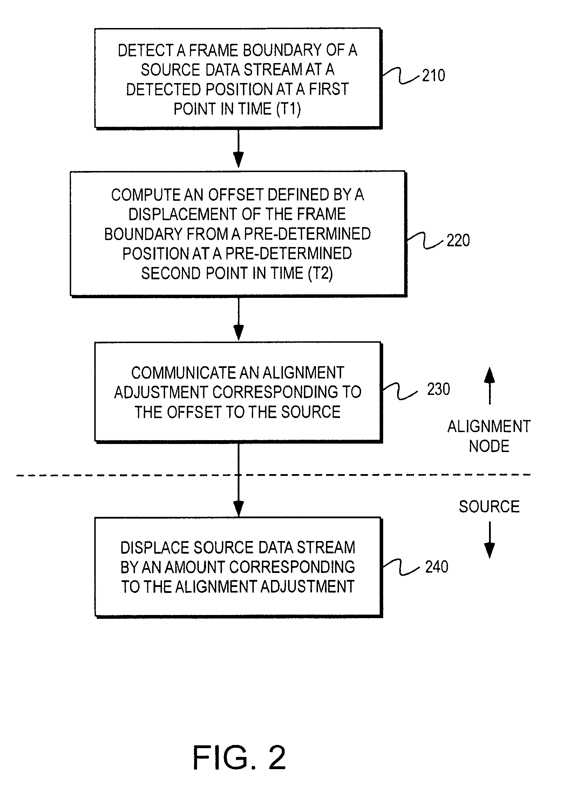

Figure 2 illustrates one embodiment of a frame alignment method. A frame boundary of a source data stream is detected at a first point in time (T1) in step 210. An offset defined by the displacement of the frame boundary from a pre-determined position of an input buffer at a pre-determined second point in time (T2) is computed in step 220. Although the condition T1=T2 is possible, the condition T1≠T2 is also handled appropriately. An alignment adjustment corresponding to the offset is communicated to the source in step 230. The source displaces the source data stream by an amount corresponding to the alignment adjustment in step 240.

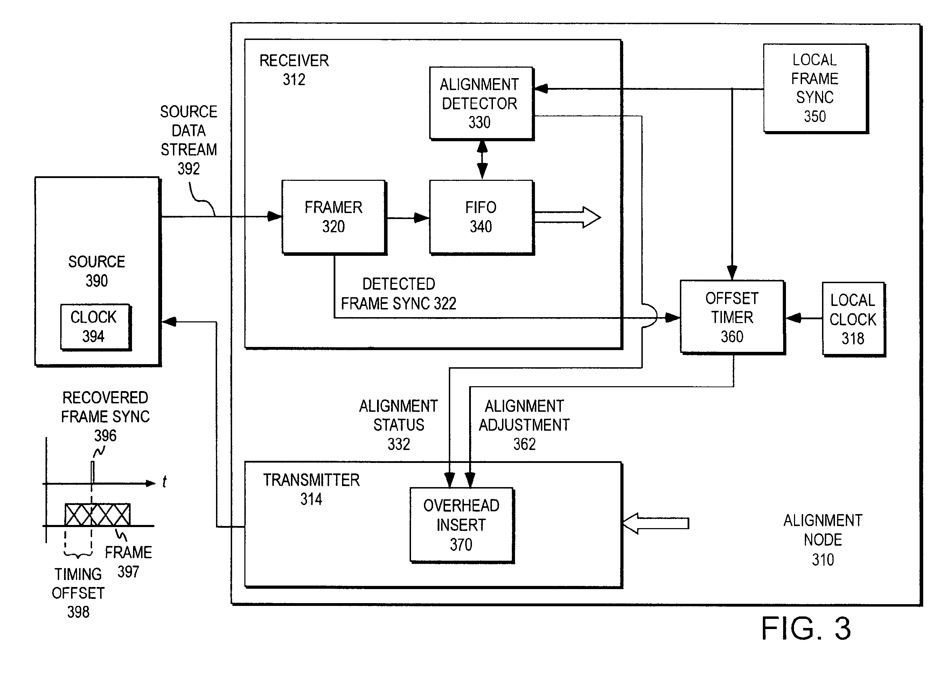

Figure 3 illustrates one embodiment of an alignment node. Source 390 provides a source data stream 392 to the alignment node 310. The alignment node includes a receiver 312 and a transmitter 314 for communication with the source. Framer 320 recovers a clock signal from the source data stream and uses the recovered clock to write the incoming data into an input buffer such as first-in-first-out (FIFO) buffer 340. Framer 320 signals the detection of a frame boundary with the detected frame sync signal 322.

Local frame sync 350 issues a local frame sync signal periodically. In one embodiment, for example, a local frame sync is asserted approximately once every 125 µs. This local frame sync assertion represents the pre-determined time that the frame boundary is expected to be in the FIFO buffer 340.

In response to the local frame sync signal, alignment detector 330 determines whether a frame boundary is located within the FIFO buffer 340. If a frame boundary is within the FIFO buffer at the pre-determined time, alignment detector 330 asserts the alignment status 332 to indicate that the source data stream is frame-aligned. Otherwise, the alignment status is de-asserted to indicate lack of frame alignment.

An offset timer 360 is used to compute the offset of the detected frame at a detected position at a first time (T1) from a pre-determined position within the FIFO buffer 340 at the pre-determined time (T2) indicated by the local frame sync signal. The offset is based at least in part on the difference between T1 and T2.

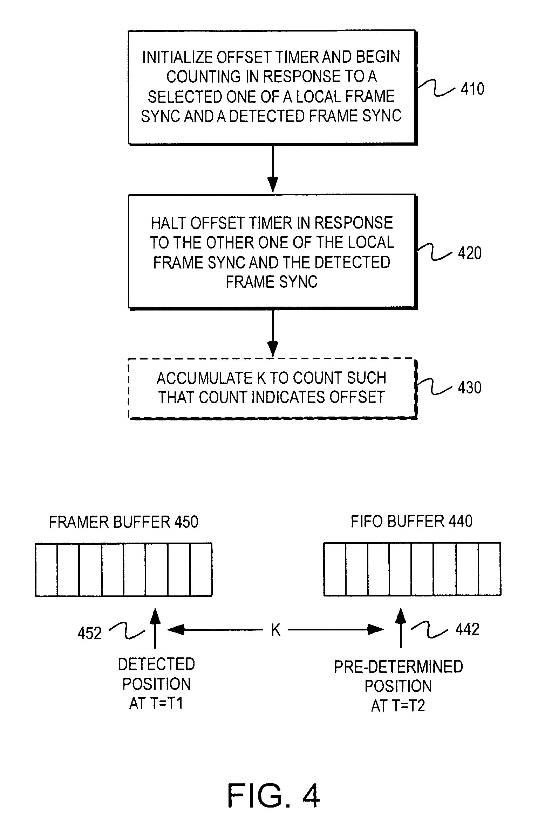

Figure 4 illustrates one embodiment of a method of computing the amount of displacement of the frame boundary using the offset timer. In step 410, the offset timer is initialized and begins counting in response to a selected one of the local frame sync and the detected frame sync. The offset timer counts at a rate determined by local clock 318. In step 420, the offset timer is halted in response to the other of the local frame sync and the detected frame sync.

Thus in one embodiment, the offset timer is initialized and begins counting in response to the asserted local frame sync signal. The offset timer stops in response to the asserted detected frame sync signal.

In an alternative embodiment, the offset timer is initialized and begins counting in response to the asserted detected frame sync signal. The offset timer stops in response to the asserted local frame sync signal.

The timing difference between the local frame sync assertion and the detected frame sync assertion is not sufficient to account for the displacement of the frame boundary from the desired pre-determined position within the FIFO buffer. The frame boundary is detected at a detected position in the framer buffer 450 at time T1. The frame boundary should be at a pre-determined position within the FIFO buffer 440 at time T2. In one embodiment, the pre-determined position is substantially the center of the FIFO buffer.

Given that the frame boundary is being detected within a buffer (framer buffer 450) other than the FIFO buffer 440, the displacement between the detected position 452 and the desired pre-determined position 442 must also be accounted for. Generally, this displacement can be represented as a constant, K. The source data stream takes time to proceed through the framer buffer to the FIFO input buffer. Thus the frame boundary will require some amount of time to progress from the detected position 452 within the framer buffer and the desired pre-determined position 442 within the FIFO buffer 440. If T1=T2, for example, the offset timer might indicate a count of zero, yet the detected frame would be displaced by an amount equivalent to an offset timer count value of K.

The offset timer count corresponding to the difference between the detected frame sync and the local frame sync must thus be adjusted by the value K. As indicated in step 430, K is accumulated to the count such that the count indicates the desired offset. If the offset timer counts from zero, K may be accumulated after the count is halted as indicated by the dotted lines of step 430. Instead of a post-count accumulation, however, the offset timer may be initialized with K (pre-count accumulation) so that the offset timer starts counting from K rather than zero. In the latter case, step 430 is incorporated into step 410. The result is that the offset timer yields an offset defining the displacement of the detected frame at the detected position and the first time (T1) from the pre-determined position at the second time (T2).

The alignment adjustment is derived from the offset. The alignment status and alignment adjustment are communicated to the source so that appropriate adjustments can be made. Referring to Figure 3, the alignment status 332 and alignment adjustment 362 are provided to an overhead insert block 370 within the transmitter 314 of the alignment node. The alignment status and alignment adjustment are then communicated to the source using frame overhead.

The source must be aware of whether the alignment adjustment indicates an amount by which to advance or to retard the source data stream. This is determined by the design of whether the offset timer starts in response to assertion of the local frame sync or the detected frame sync.

The alignment node may simply use the offset indicated by the offset timer as the alignment adjustment. Alternatively, the alignment node may convert the offset into a source-compatible alignment adjustment. This conversion may entail computing an alignment adjustment representing the same amount of time with a different clock base.

Likewise, the source may need to perform conversions on the alignment adjustment. In one embodiment, the source clock 394 used by the source when communicating the source data stream operates at a different clock rate than the local clock 318 driving the offset timer. The alignment adjustment must therefore be converted to reflect the same amount of time in terms of the number of source clock cycles. Regardless of whether the source or the alignment node perform any conversions, the alignment adjustment is used by the source to change the timing offset 398 between assertion of the source's recovered frame sync 396 and the time at which the source initiates communication of a frame 397.

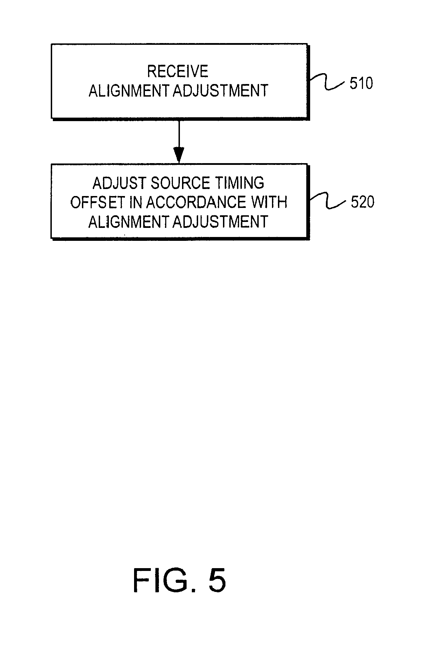

Figure 5 illustrates one embodiment of a method of adjusting a source timing offset for frame alignment. The source receives an alignment adjustment in step 510. In step 520, the source timing offset is adjusted in accordance with the alignment adjustment. Step 520 may entail conversions for different clock rates or advancing/retarding the source data stream as appropriate.

The process of Figure 5 is sensitive to any perturbations occurring in the communication network that might cause any divergences from alignment including nominal divergences. The process may be modified to provide for greater stability with respect to the reaction of the source to received alignment adjustments.

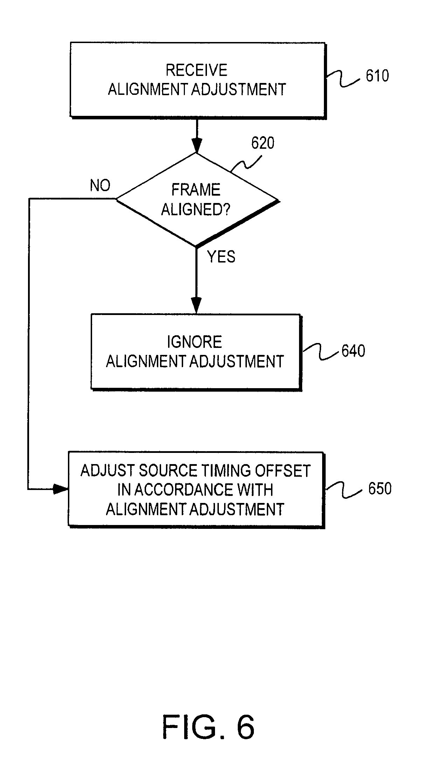

Figure 6 illustrates one embodiment of an alternative approach for adjusting the source timing offset. In step 610, the source receives an alignment adjustment. Step 620 determines whether the source data stream is frame-aligned. If the source data stream is frame-aligned, then the alignment adjustment is ignored in step 640. Otherwise the source timing offset is adjusted in step 650 in accordance with the alignment adjustment. Thus the source timing offset is not continuously being adjusted in an attempt to maintain frame boundaries at the pre-determined position within an input buffer of the alignment node. The method of Figure 6 introduces an adjustment "dead-zone". Until the frame boundary drifts such that the source data stream is no longer in frame-alignment with the alignment node, no adjustments are made to the timing offset of the source.

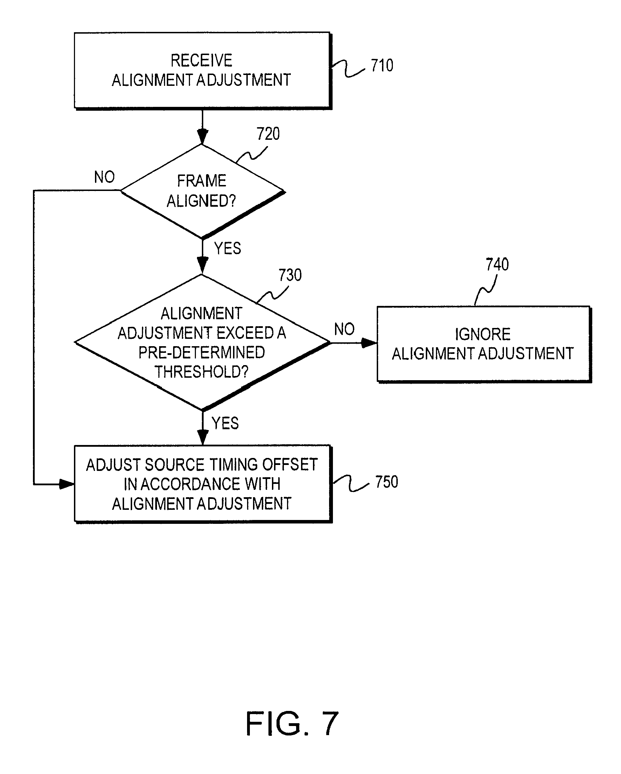

Figure 7 illustrates one embodiment of an alternative method for adjusting the source timing offset. The method of Figure 7 provides resistance to stability in the presence of perturbations, but does not allow the source data stream to drift out of frame-alignment before making the appropriate adjustment. In contrast with Figure 5 (no dead-zone), or Figure 6 (dead-zone same size as alignment node input buffer), the method of Figure 7 introduces a dead-zone that is smaller than the size of the alignment node input buffer.

In step 710, the source receives an alignment adjustment. Step 720 determines whether the source data stream is frame-aligned. If not, then the source timing offset is adjusted in accordance with the alignment adjustment in step 750. If the source data stream is frame-aligned, step 730 determines whether the alignment adjustment exceeds a pre-determined threshold. This pre-determined threshold represents an acceptable displacement of the frame boundary from the pre-determined position within the alignment node input buffer. If the alignment adjustment does not exceed the pre-determined threshold, the alignment adjustment is ignored in step 740. Otherwise, the source timing offset is adjusted in accordance with the alignment adjustment in step 750.

In one embodiment, the source may also determine whether to advance or retard the source data stream based on the alignment adjustment. If the total source timing offset exceeds a pre-determined threshold, for example, the alignment adjustment may be converted from an amount to advance for a given frame to a lesser amount to retard for an adjacent frame.

The local frame sync of the alignment node is periodic. Assume that the interval between assertions of the local frame sync 350 is M source clock cycles apart. Assume that the alignment adjustment has a value of Z and that the timing offset for the source is initially S. Instead of advancing/retarding the source data stream by an adjustment amount corresponding to Z, the source data stream may alternately be retarded/advanced by an amount M - Z.

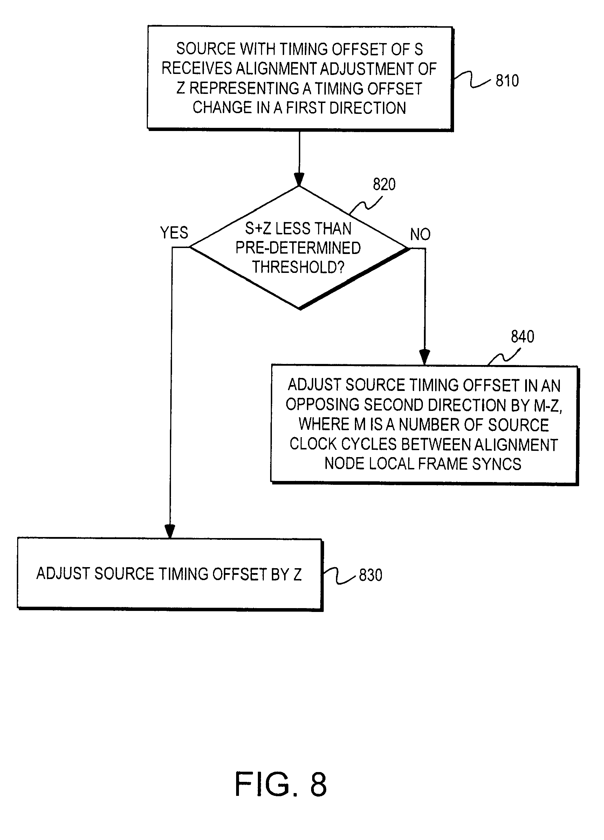

Figure 8 illustrates one embodiment of a method of adjusting a timing offset. A source having a timing offset of S receives an alignment adjustment value of Z in step 810. Z represents a timing offset change in a first direction (i.e., advance or retard). If S+Z is less than a pre-determined threshold as determined by step 820, the source adjusts its timing offset by Z in step 830. If S+Z exceeds a pre-determined threshold, then in step 840 the source adjusts its timing offset in an opposing second direction by M-Z, where M is the number of source clock cycles between assertions of the local frame sync (i.e., M is the interval between the beginning of sequential frame boundaries). Thus if Z represents a first displacement having a first direction (i.e., advance or retard), then a second displacement of M-Z in an opposing second direction (i.e., retard or advance) may be performed (i.e., source timing offset set to S - (M - Z) ) if S + Z exceeds a pre-determined threshold. In one embodiment, the pre-determined threshold is M/ 2. In another embodiment, the pre-determined threshold is M.

Once the source adjusts it timing offset in according with the alignment adjustment, subsequent frames will be communicated such that their boundaries occur at the pre-determined position within the input buffer of the alignment node at the pre-determined times dictated by the local frame sync. Thus the alignment adjustment will be reduced to a level such that no subsequent changes are required in alignment. In one embodiment, the alignment adjustment is reduced to a negligible amount such as zero. In an alternative embodiment, the alignment adjustment is reduced to a value below a pre-determined threshold (attempts to reduce the alignment adjustment further may prove fruitless due to induced imprecision from crossing clock domains, or communicating at different clock rates, etc.). Given that all timing offsets of the detected frame boundaries are computed relative to the desired pre-determined position, alignment converges rapidly (single alignment adjustment).

Once frame alignment is achieved the contents of the frames may be interpreted for performing further synchronization operations. The serial data stream is packaged into frames for transport, however, the frames may represent portions of a larger multiframe. In order to ensure proper synchronization between the source and the alignment node, the frame boundary of a specific frame of the multiframe is expected to be within the alignment node FIFO buffer at a pre-determined time (multiframe alignment). In one embodiment, the alignment node provides a frame adjustment to enable the source to advance/retard the source data stream to achieve multiframe alignment.

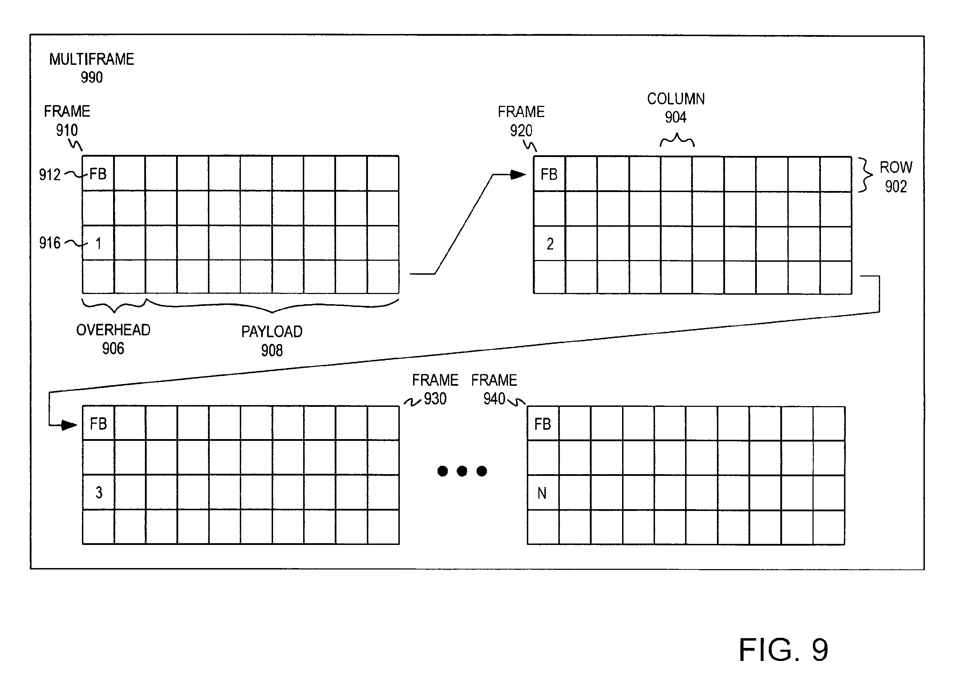

Figure 9 illustrates one embodiment of a multiframe 990 consisting of a plurality of frames 910-940. Each frame is organized into rows 902 and columns 904 for purposes of illustration. Each frame is serially communicated proceeding row-to-row from top-to-bottom and left-to-right. Thus, for example, byte 912 is the first byte communicated in the serial data stream for multiframe 990.

Each frame may have an overhead area 906 and a payload area 908. The payload area represents the data being transported to a destination. The overhead area includes information used in transporting the frame. In the illustrated embodiment, for example, the overhead area includes a framing byte 912 and multiframe position 916. The framing byte is used to establish the frame boundary during frame alignment. The multiframe position 916 indicates the position of the frame in the sequence of n frames forming the multiframe. Basic frame alignment is required to locate the multiframe position byte.

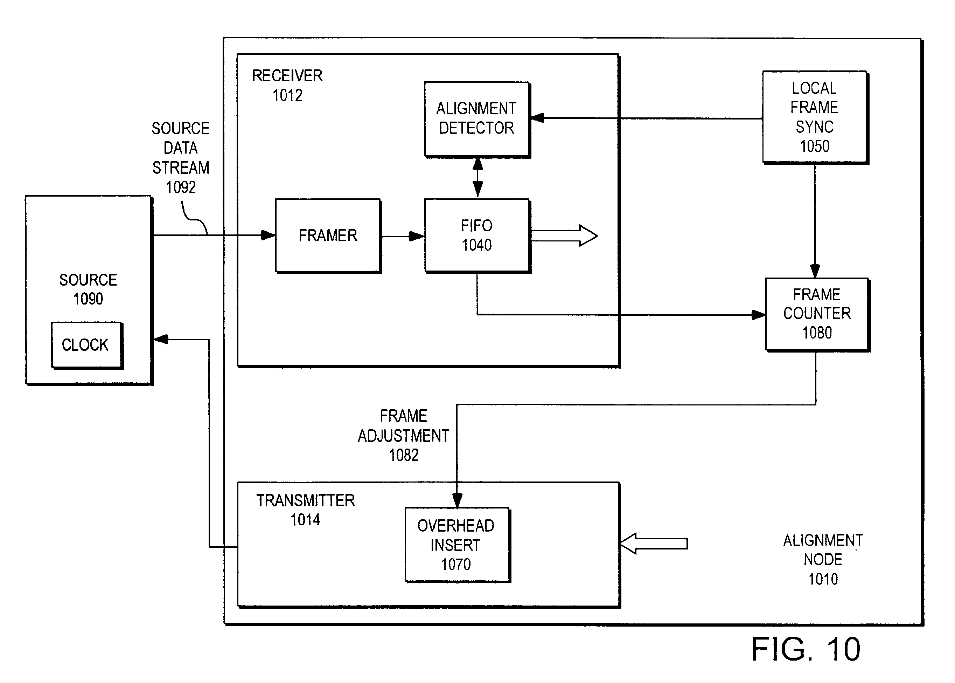

Figure 10 illustrates one embodiment of a multiframe alignment apparatus. The previously described frame alignment apparatus is generally omitted for clarity. A multiframe has a boundary coincident with that of a frame. Therefore, one assertion of the local frame sync out of an n plurality of assertions represents a multiframe sync as well as a frame sync. The multiframe sync is associated with the first frame of the multiframe. The remaining assertions are associated with the remaining constituent frames of the multiframe.

The source data stream 1092 communicated from the source 1090 is received into the FIFO buffer 1040 of the receiver 1012 of the alignment node 1010. Once frame alignment is reached, the multiframe position provided by a received frame can be examined to determine if multiframe alignment has been reached.

A frame counter 1080 counts assertions of the local frame sync 1050 to determine the expected frame position of a multiframe. The frame counter is reset every n local frame sync assertions, where n represents the pre-determined number of frames in a multiframe. The frame counter compares the expected frame position as determined by the frame count with the multiframe position provided by the frame received in the FIFO buffer 1040 immediately subsequent a local frame sync assertion. The frame counter generates a multiframe adjustment 1082 indicating the difference between the expected frame position and the multiframe position indicated by the received frame. The multiframe adjustment is provided to the overhead insert block 1070 within the transmitter 1014 of the alignment node. The multiframe adjustment is then communicated to the source 1090 using frame overhead.

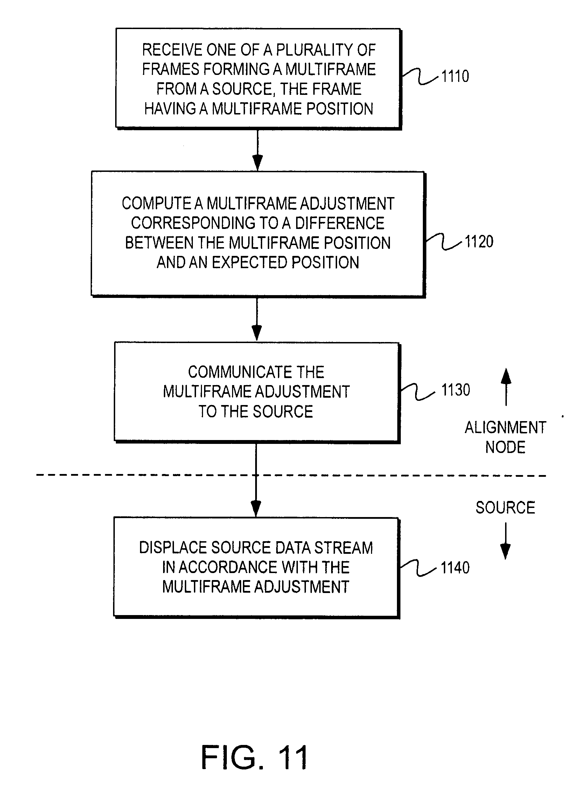

Figure 11 illustrates one embodiment of a method of performing a multiframe alignment. In step 1110, one of a plurality of frames forming a multiframe is received from a source. The frame has a multiframe position. A multiframe adjustment corresponding to the difference between the expected frame position and the multiframe position is computed in step 1120. The multiframe adjustment is communicated to the source in step 1130. The source adjusts (i.e., advances/retards) the source data stream, if necessary, to achieve multiframe alignment in step 1140. The source is multiframe-aligned such that the multiframe position of a subsequently received frame matches the expected position for the subsequently received frame. Multiframe alignment is frame alignment with the additional constraint that a specific frame of the multiframe is positioned within the alignment node FIFO buffer at a pre-determined time.

Frame alignment and multiframe alignment are achieved by using different granularities of adjustment. Frame alignment, for example, is achieved using a granularity corresponding to a subset of a frame such as a bit or a byte of data. Frame alignment can achieve a displacement approaching the size of one frame. Multiframe alignment is achieved using a granularity of a frame. Multiframe alignment can achieve a displacement approaching the size of the multiframe (i.e., one or more frames).

Achieving multiframe alignment thus requires alignment at two levels of granularity. Frame alignment must first be achieved using a first granularity. Multiframe alignment is then accomplished using a second granularity. The term "frame adjustment" will be used to refer to amounts to displace the source data stream irrespective of granularity.

Two levels of granularity might also be used for frame alignment in the event that the alignment adjustment does not support sufficient range to describe the needed displacement at the required resolution. A first alignment adjustment may be communicated as a frame adjustment with a first granularity. When the source displaces the data stream in accordance with the first alignment adjustment, the data stream is brought closer to eliminating the displacement of the frame boundary from a pre-determined position of the input buffer at the time pre-determined by the local frame sync. A second alignment adjustment is communicated as a frame adjustment with a finer, second granularity. When the source displaces the data stream in accordance with the second alignment adjustment, the data stream is frame aligned. The frame boundary is located within the input buffer at the time pre-determined by the local frame sync. In addition, the frame boundary is located at the pre-determined position within the input buffer.

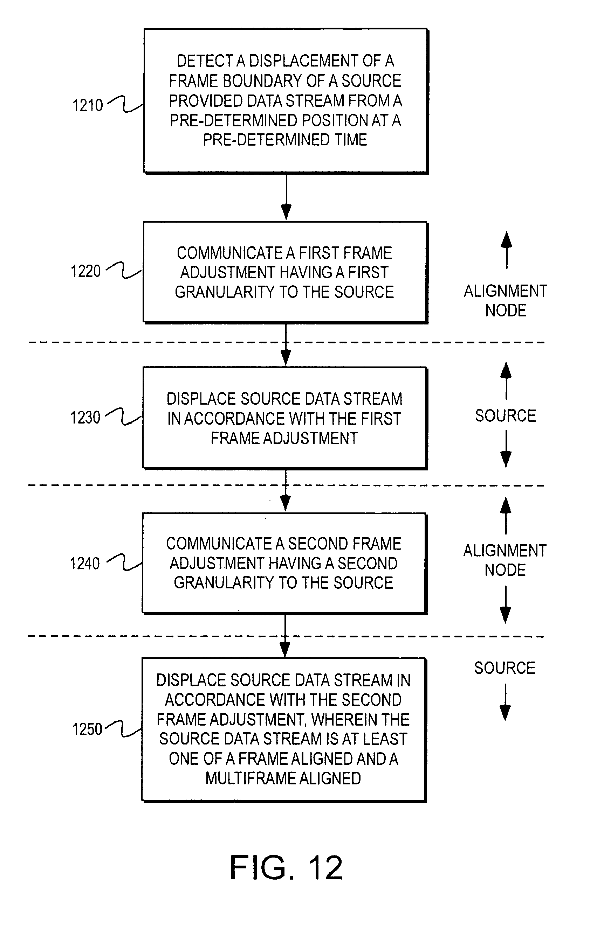

Figure 12 illustrates one embodiment of a method of performing either a frame alignment or a multiframe alignment using multiple granularities. In step 1210, a displacement of a frame boundary of a source provided data stream from a pre-determined position at a pre-determined time is detected.

A first frame adjustment having a first granularity is communicated to the source in step 1220. The source displaces the data stream in accordance with the first frame adjustment in step 1230. In one embodiment this results in frame alignment with the frame boundary located at the pre-determined position within the input buffer at the pre-determined time. In another embodiment, this results in frame alignment with some residual displacement from the desired pre-determined position. In an alternative embodiment, this results in converging towards frame alignment.

In step 1240, a second frame adjustment having a second granularity is communicated from the alignment node to the source. In one embodiment, the second granularity is less than a frame in size (e.g., bit, byte, word, etc.). In an alternative embodiment, the second granularity is a frame in size. The source displaces the data stream in accordance with the second frame adjustment in step 1250 to reach either frame alignment or multiframe alignment as the case may be.

Various methods and apparatus for performing frame alignment and multiframe alignment have been described. In particular, methods and apparatus for detecting or computing the alignment adjustment from the alignment node perspective as well as methods and apparatus for varying the timing offset of the source in response to the alignment adjustment have been presented.

In the preceding detailed description, the invention is described with reference to specific exemplary embodiments thereof. Various modifications and changes may be made thereto without departing from the broader scope of the invention as set forth in the claims. The specification and drawings are, accordingly, to be regarded in an illustrative rather than a restrictive sense.

In addition, the following numbered paragraphs describe further preferred aspects and features of the invention.
1. An apparatus comprising:
   a plurality of sources each providing a source data stream organized into frames; and
   an alignment node coupled to receive each source data stream into an associated input buffer, wherein for each source the alignment node generates an associated alignment adjustment corresponding to an offset defined by a displacement of a frame boundary detected at a detected position at a first point in time (T1) from a pre-determined position within the associated input buffer at a second point in time (T2).
2. The apparatus of paragraph 2 wherein each source displaces its source data stream in accordance with its associated alignment adjustment.
3. A method comprising:
   a. detecting a displacement of a frame boundary of a source-provided data stream from a pre-determined position at a pre-determined time within an input buffer of an alignment node;
   b. communicating a first frame adjustment having a first granularity to the source; and
   c. communicating a second frame adjustment having a second granularity to the source to reach one of a frame alignment and a multiframe alignment of the source data stream with the alignment node.
4. The method of paragraph 3 further comprising displacing the source data stream in accordance with the first frame adjustment.
5. The method of paragraph 4 wherein the source data stream is frame-aligned upon performing the first frame adjustment.
6. The method of paragraph 5 wherein subsequent frame boundaries arrive at the pre-determined position at corresponding pre-determined times.
7. The method of paragraph 4 wherein the source data stream is not frame-aligned upon performing the first frame adjustment.
8. The method of paragraph 4 further comprising displacing the source data stream in accordance with the second frame adjustment.
9. The method of paragraph 8 wherein the source data stream is multiframe-aligned upon performing the second frame adjustment.

## Claims

1. A method comprising:
a) detecting a frame boundary of a source data stream at a detected position at a first point in time (T1);
b) computing an offset defined by the displacement of the frame boundary from a pre-determined position at a second point in time (T2); and
c) communicating an alignment adjustment to a source of the source data stream, wherein the alignment adjustment corresponds to the offset.

2. The method of claim 1 comprising:
d) displacing the source data stream by an amount corresponding to the alignment adjustment.

3. The method of claim 1 wherein b) comprises:
i) initializing a counter and beginning counting in response to a selected one of a local frame sync and a detected frame sync, wherein the local frame sync indicates the pre-determined second point in time; and
ii) halting counting in response to the other of the local frame sync and the detected frame sync, wherein the detected frame sync indicates detection of the frame boundary at the first point in time.

4. The method of claim 3 wherein the offset timer is initialized with a value of K, wherein K represents a displacement of the detected position at the first point in time from the pre-determined second position at the second point in time.

5. The method of claim 3 further comprising:
iii) adjusting the count by a value of K, wherein K represents a displacement of the detected position at the first point in time from the pre-determined position at the second point in time.

6. The method of claim 1, wherein the source node is coupled to the alignment node by one of an electrical and an optical path.

7. The method of claim 1 wherein the alignment adjustment has a value of Z indicating a timing offset change in a first direction, wherein S is an initial source timing offset, wherein M is an interval between sequential frame boundaries, further comprising
d) displacing the source data stream in an opposing second direction by an amount M-Z, if S+Z exceeds a pre-determined threshold.

8. The method of claim 7 wherein the pre-determined threshold is a selected one of M and M/2.

9. The method of claim 1 wherein the alignment adjustment has a value of Z indicating a timing offset change in a first direction, wherein S is an initial source timing offset, wherein M is an interval between sequential frame boundaries, further comprising
d) displacing the source data stream by Z, if S+Z does not exceed a pre-determined threshold.

10. An apparatus comprising:
an alignment node (150) coupled to receive a source data stream (112) organized into frames, wherein the alignment node generates an alignment adjustment (362) corresponding to an offset defined by a displacement of a frame boundary detected at a detected position (452) at a first point in time (T1) from a pre-determined position (442) at a second point in time (T2).

11. The apparatus of claim 10 wherein the alignment node further comprises:
a framer circuit (320) providing a detected frame sync (322) at the first point in time upon detecting the frame boundary at the detected position;
a local frame sync circuit (350) providing a local frame sync indicating the pre-determined second point in time; and
an offset timer (360), wherein the offset timer is initialized and begins counting in response to a selected one of the local frame sync and the detected frame sync, wherein the offset timer halts counting in response to the other of the local frame sync and the detected frame sync.

12. The apparatus of claim 11 wherein a value K is accumulated to a count of the offset timer such that the count is the offset.

13. The apparatus of claim 12 wherein the offset timer is initialized with the value K.

14. The apparatus of claim 12 wherein the value K is accumulated to the offset timer subsequent to the halt of counting.

15. The apparatus of claim 11 wherein the alignment node includes an input buffer (340), wherein the pre-determined position is substantially the center of the input buffer.

16. The apparatus of claim 10 wherein the alignment adjustment (362) is the offset.

17. The apparatus of claim 10 further comprising:
a source coupled to receive the alignment adjustment, wherein the source adjusts its timing offset in accordance with the alignment adjustment.

18. The apparatus of claim 10, wherein the source data stream is communicated to the alignment node on at least one of an electrical path and an optical path.

19. A method comprising:
(a) receiving (1110) a source data stream including one of a plurality of frames (910) forming a multiframe (990) from a source, the frame having a multiframe position (916);
(b) computing (1120) a multiframe adjustment corresponding to a difference between the multiframe position and an expected position; and
(c) communicating (1130) the multiframe adjustment to the source.

20. The method of claim 19 comprising:
(d) displacing the source data stream in accordance with the multiframe adjustment, whereby the source is multiframe aligned such that the multiframe position of a subsequently received frame matches the expected position for the subsequently received frame.
